Europäisches Patentamt

European Patent Office

Office européen des brevets

(11) Publication number: **0 154 390**
**B1**

(12) **EUROPEAN PATENT SPECIFICATION**

(45) Date of publication of patent specification: **03.01.90**

(21) Application number: **85300317.6**

(22) Date of filing: **17.01.85**

(51) Int. Cl.⁵: **G 09 F 3/14, B 29 C 65/00**

(54) Tag pin fastener assembly and method.

(30) Priority: **21.01.84 KR 25984**

(43) Date of publication of application:
**11.09.85 Bulletin 85/37**

(45) Publication of the grant of the patent:
**03.01.90 Bulletin 90/01**

(84) Designated Contracting States:
**BE DE FR GB IT NL**

(56) References cited:
**US-A-3 733 657**
**US-A-4 392 906**

(73) Proprietor: **Ben Clements & Sons, Inc.**
**50 Ruta Court**
**South Hackensack, N.J. 07606 (US)**

(72) Inventor: **Yong, Kwon Won**
**244-6 Nong Dong**
**Sungdong Ku Seoul (KR)**

(74) Representative: **Wilson, Nicholas Martin et al**
**WITHERS & ROGERS 4 Dyer's Buildings Holborn**
**London EC1N 2JT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Background of the Invention

The present invention is generally directed to a fastener assembly and method of manufacturing a fastener assembly and, in particular, to an improved tag pin fastener assembly in which individual tag pins are used for attaching tags to merchandise, and to a method of constructing such a tag pin fastener assembly.

Conventional tag pin fasteners used in attaching tags to clothing and other merchandise generally include a head section and a lateral rod section or cross-bar which are coupled together by a string or filament. The tag pin assembly is integrally molded from a plastic material. Individual tap pins are integrally formed on a connecting rod by means of connecting necks which extend from the cross-bars. The assembly is loaded into a tag attaching gun which removes and feeds individual fasteners from the assembly such that the cross-bar penetrates the clothing or merchandise involved and becomes engaged therewith. For convenience in use, the fasteners are made in the form of an assembly which generally includes about 50 individual fasteners on the connecting rod.

Attempts have been made for increasing the number of fasteners per unit length in a fastener assembly so that the fastener assembly can be made smaller and the time for loading a new fastener assembly into the attaching gun can be reduced. This, in turn, would allow the use of more fasteners during a specified time period and consequently more clothing and other merchandise can be tagged without reloading the attaching gun.

One method for increasing the fasteners per unit length is by using a mold with thin mold walls whereby the thickness of a fastener is reduced and the distance between each fastener on the assembly is also reduced. Tests have been carried out whereabout twice as many tag pins in the same unit length have been molded by molding in a single die such that the thickness of each fastener is reduced to 0.8 to 0.9 mm and the distance between each fastener is about 0.1 to 0.3 mm. Such a method, however, requires special precision in preparing the mold since the thickness of the mold wall between the individual grooves required for making each fastener is a minute distance between about 0.2 to 0.4 mm. Furthermore, a mold having such a small distance between the grooves can be easily damaged, and thus commercial production is practically impossible.

U.S. Patent 3 733 657 discloses a tag pin assembly with individual pins spaced along a connecting bar and readily frangible therefrom; the distance between adjacent tag pins is greater than the thickness of each pin.

U.S. Patent 4 392 906 discloses a laminated stack of tag pins in which individual pins are assembled in a stack and fused together in a manner capable of permitting separation one by one. In this arrangement individual pins are punched from sheet material rather than being moulded as an assembly of for example 50 pins on a connecting rod.

Accordingly, it is desired to provide an improved tag pin fastener assembly and method wherein the number of fasteners per unit length is increased in order to reduce the size of the fastener package and reduce the time for refilling the fastener assembly in a tag attaching gun.

### Summary of the Invention

In accordance with the present invention, there is provided a tag pin fastener assembly comprising a first tag pin assembly member having a first connecting rod and a plurality of tag pins coupled to said first connecting rod in a predetermined spacing, a second tag pin assembly member having a second connecting rod and a plurality of tag pins coupled to said second connecting rod in said predetermined spacing, and coupling means for coupling said first and second connecting rods so that said tag pins on said first rod are alternately arranged with the tag pins on said second rod whereby a complete tag pin fastener assembly is provided.

In a preferred embodiment, the tag pins each include a head section and cross-bar section joined together with a filament or string. A connecting neck extends from the cross-bar in a direction opposite to the filament which couples the tag pins to the connecting rod. The connecting neck is formed partially on the connecting rod such that a portion of the neck extends off of the connecting rod. When the two connecting rod members are coupled, the tag pins on the two connecting rods will be alternately spaced in a straight line. Various methods of coupling the connecting rods are possible such as, for example, by using an adhesive, by melting or heat fusion, by a tongue and groove arrangement, by a snap-type fit, and the like.

Under the method of the present invention, the steps include molding a first tag pin assembly member having a first connecting rod and a plurality of tag pins coupled to the first connecting rod in a predetermined spacing, and molding a second tag pin assembly member having a second connecting rod and a plurality of tag pins coupled to the second connecting rod in the predetermined spacing. A further step includes coupling of the first and second connecting rods such that the tag pins are alternately arranged along the combined connecting rods.

Therefore, in accordance with preferred arrangement of the present invention there is provided an improved tag pin fastener assembly and method in which the spacing between adjacent tag pins is substantially reduced and wherein the number of fasteners per unit length on the assembly is increased.

The improved fastener assembly may reduce the time for reloading a tag attaching gun and yet does not require special precision in preparing a mold for constructing the assembly.

The invention accordingly comprises the several steps and the relation of one or more of such steps with respect to each of the others, and the article possessing the features, properties, and the relation of elements, which are exemplified in the following detailed disclosure, and the scope of the invention will be indicated in the claims.

Brief Description of the Drawings

The invention will now be described by way of example with reference to the accompanying drawings, in which:

Fig. 1 is a perspective view of a tag pin fastener assembly constructed in accordance with a preferred embodiment of the present invention;

Fig. 2 is a perspective view of a fastener assembly constructed in accordance with the prior art.

Fig. 3 is an enlarged side elevational view of the fastener assembly depicted in Fig. 1;

Fig. 4 is an enlarged side elevational view of the fastener assembly of the prior art depicted in Fig 2.

Fig. 5 is a perspective view of the two members of the fastener assembly depicted in Fig. 1 prior to being coupled together;

Fig. 6 is a front elevational view in partial cross-section of the two members of the fastener assembly prior to being coupled;

Fig. 7 is a front elevational view in partial cross-section of the fastener assembly of Fig. 6 shown coupled;

Fig. 8 is a front elevational view in partial cross-section of another embodiment of the fastener assembly in accordance with the present invention shown prior to coupling; and

Fig. 9 is s front elevational view in partial cross-section of the fastener assembly of Fig. 8 shown coupled.

Description of the Preferred Embodiments

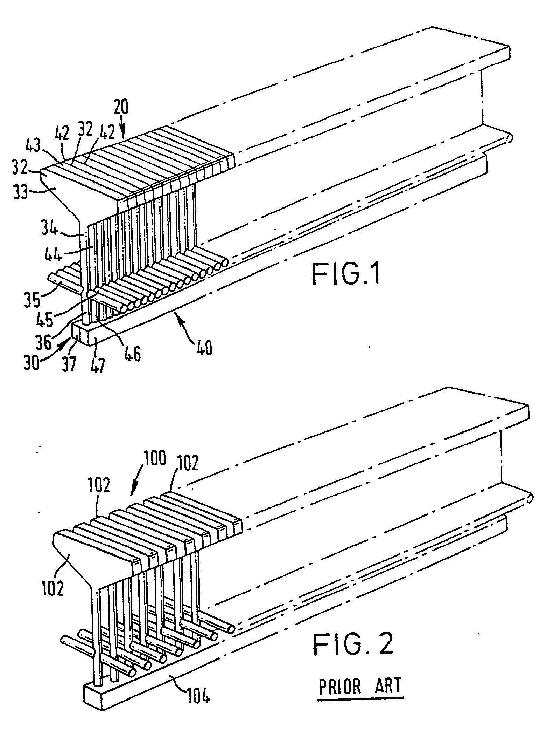

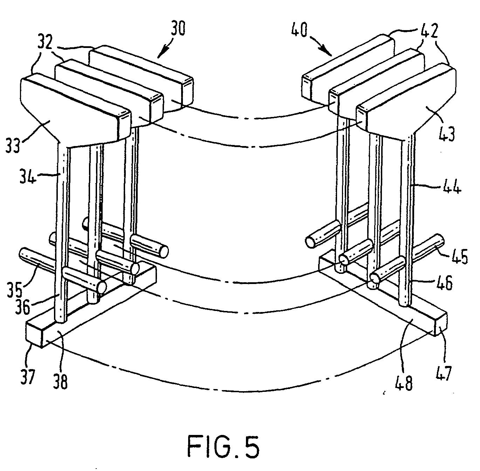

Reference is first made to Figs. 1, 3 and 5 through 7 which depict a fastener assembly, generally indicated at 20, constructed in accordance with a first embodiment of the present invention. Tag pin fastener assembly 20 includes a first tag pin assembly member 30 and a second tag pin assembly member 40. First assembly member 30 includes a plurality of tag pins 32 and second assembly member 40 includes a plurality of tag pins 42. As will be described below in detail, tag pins 32 are alternatively arranged with respect to tag pins 42.

Since first and second fastener assembly members 30 and 40 are of the same form, only the construction of first fastener assembly member 30 will be described in detail. Component parts of first fastener assembly member 30 will be numbered in the 30's and corresponding parts in second fastener assembly member 40 will be numbered in the 40's. First fastener assembly member 30 includes a plurality of tag pins 32 each of which include a plate-type head section 33 and a lateral rod or cross-bar 35 which are coupled together by a connecting string or filament 34. A connecting neck 36 extends from cross-bar 35 in a direction opposite to filament 34 such that tag pins 32 can be coupled through their respective connecting necks 36 to a connecting rod 37.

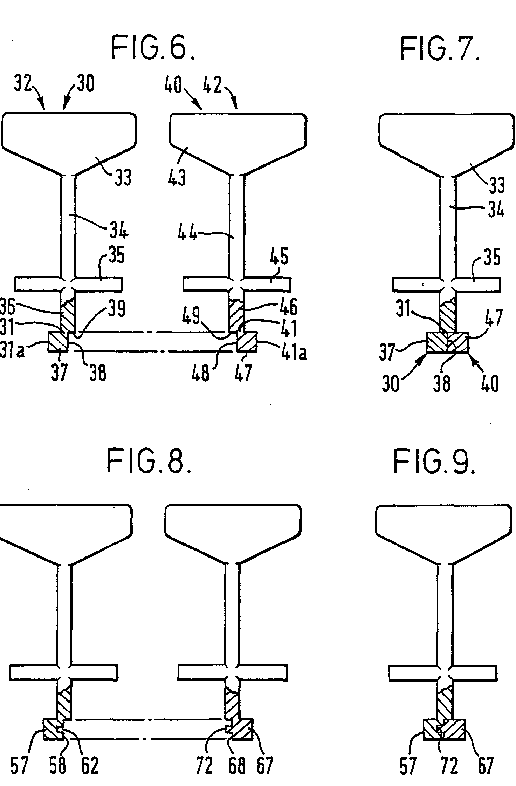

Connecting rod 37 includes a bonding surface 38 as best depicted in Figs. 5 through 7. which is at the lower side of connecting neck 36 in the longitudinal direction. Bonding surface 38 is formed in such a way that it makes substantially a right angle with surface 39 of the lower end of connecting neck 36. Connecting neck 36 and connecting rod 37 are coupled at a connecting region 31 which is about half of the diameter of connecting neck 36. In other words, connecting neck 36 is formed partially on connecting rod 37 such that about half of connecting neck 36 indicated at 31, is formed on connecting rod 37 and the other half of connecting neck 36, indicated at 39, extends off of connecting rod 37 so as to substantially form a right angle with bonding surface 38. Outer surface 31a of connecting rod 37 at the side thereof which is opposite to bonding surface 38 protrudes out from the connecting region 31 of neck 36. Surface 31a can be made rectangular, circular, or the like.

In a preferred embodiment, in the fasteners 32 of first assembly 30 and fasteners 42 of second assembly 40, the thickness of the corresponding head sections 33, 43 and the diameter of the corresponding filaments 34, 44, cross bars 35, 45 and connection necks 36, 46 are between about 0.8 and 1.0 mm, and the distance between the fasteners on connecting rods 37 and 47 is between about 0.8 and 1.0 mm so that the fasteners of the two assemblies can be alternately inserted and positioned between corresponding fasteners on the other assembly. Such numerical examples are not necessarily required and the thicknesses, distances and diameters can be altered so long as the fasteners of one assembly member fit between and can be inserted between the fasteners of the other assembly member.

Tag pins 32 are formed on connecting rod 37 such that there is a predetermined spacing between each of tag pins 32. Similarly, tag pins 42 are arranged on connecting rod 47 at substantially the same predetermined spacing. Accordingly, tag pins 32 will be alternately arranged with respect to tag pins 42 when they are brought together and their respective connecting rods 37 and 47 coupled together.

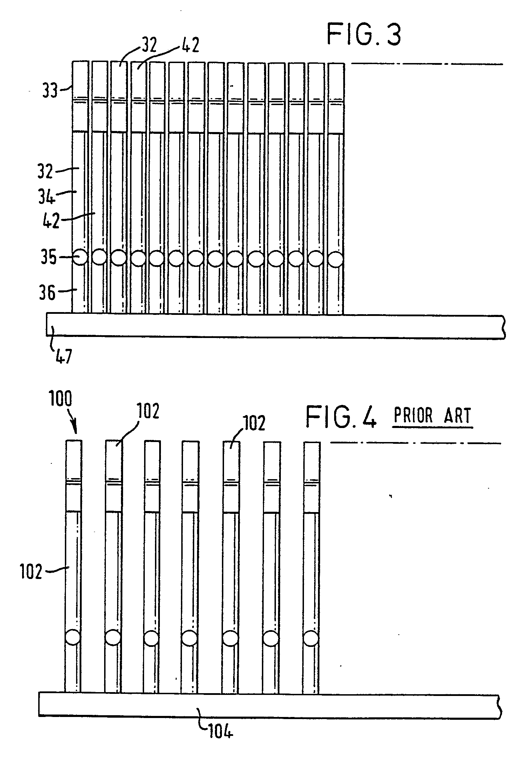

Prior art tag pin assemblies are depicted in Figs. 2 and 4. Prior art tag pin assembly 100 includes a plurality of tag pins 102 which are integrally molded on a connecting rod 104. Due to mold limitations as described in detail above, spacing between adjacent tag pins 102 is limited by the thickness of the mold walls in the mold. Comparing Fig. 2 to Fig. 1 and Fig. 4 to Fig. 3, it is seen that the present invention permits a much more closely spaced tag pin assembly than was heretofore available in prior art constructions. Accordingly, the present invention obtains each of the objects and advantages detailed above.

The method of the present invention will now be described. Initially, the first and second tag pin assembly members are formed in a mold. The first and second tag pin assemblies each include a plurality of tap pins coupled to a separate connecting rod in predetermined spacing. Fasteners 32 of first fastener assembly member 30 are alternately inserted between fasteners 42 of second fastener assembly 40 such that they lie in a straight line. Corresponding head sections 33 and 43 and corresponding cross bars 35 and 45 of each fasteners lie in the same plane and connecting filaments 34 and 44 are positioned on the same vertical plane in the longitudinal direction. Fastener assembly members 30 and 40 are then coupled such as by bonding at the bonding surfaces 38 and 48 of the respective connecting rods 37 and 47. When the bonding surfaces 38 and 48 are bonded together, the lower end surfaces 39 and 49 of connectiong necks 36 and 46, respectively, of fasteners 30 and 40 are positioned over the upper surfaces of the other connecting rod of the other fastener assembly.

Bonding of the bonding surfaces of connecting rods 37 and 47 can be achieved by a plurality of methods such as by a high frequency bonding method, and ultrasonic bonding method, by use of bonding adhesives or by bonding by melt fusion or heat. It is noted that the first and second assembly members can be bonded together before filaments 34 and 44 are stretched, however, the assembly members may also be coupled after stretching of the respective filaments has been carried out.

In tag pin fastener assembly 20 constructed in accordance with the present invention, the thickness of the head section and the diameter of the filament and cross bar of each fastener are reduced somewhat while the distance between the fasteners is made narrower to between about 0.2 to 0.4 mm. As a consequence, a unit length of the asseembly contains twice as many fasteners as in a conventional assembly. Accordingly, the package size can be reduced in half, thereby making it possible to load a fastener assembly with 100 tag pins into a tag pin attaching gun which in the prior art generally contained about 50 tag pins. Accordingly, the time for reloading the tag attaching gun can be substantially reduced.

Furthermore, when the present invention is utilized, weakening of the die wall and damage to the die can be prevented which occurred when it was attempted to reduce the thickness of the head and the diameter of the filament and cross bar of the fastener in a single mold as in the prior art. In particular, in the present invention, the distance between the fasteners can be equal to or even wider than the conventional spacing and, consequently, the mold for making the fastener assemblies can have a longer useful life.

Figs. 8 and 9 depict a second embodiment of the present invention wherein connecting rod 57 includes a groove 62 and connecting rod 67 includes a corresponding tongue 72 adapted to fit into groove 62. Thus, when connecting rods 57 and 67 are coupled together, tongue 72 will lie in grooves 62 to provide a better and tighter bonding. The same bonding methods detailed above can be utilized. However, it is noted, that the tongue and groove arrangement can be such that a snap-fit occurs whereby the two members would be held together by a friction-snap fit.

In the second embodiment depicted in Figs. 8 and 9, groove 62 and tongue 72 can be formed along the entire lengths of connecting rods 57 and 67, respectively. Alternatively, a plurality of openings or holes 62 may be provided along connecting rod 57 with corresponding projections on connecting rod 67 such that the projections fit or snap-fit into the corresponding openings in connecting rod 57. The tongue and groove can be formed in any shape so long as the tongue and groove can be engaged, depending only on the characteristics of the bonding machine and the machine for making the molds.

Example 1

The thickness of head section 33 was made to be 0.9 mm with a diameter of the filament 34, cross-bar 35 aod connecting neck 36 made to be 0.9 mm with a distance between fasteners made to be about 1.0 mm. Fastener assembly 30 was formed to contain 50 fasteners. Connecting rod 37 was formed such that bonding surface 38 was formed under neck 36 at the center line thereof with the connecting rod being coupled to the connecting neck 36 through connecting section 31. Fastener assembly 40 was formed in the same manner as fastener assembly 30.

Fastener assemblies 30 and 40 were positioned such that the corresponding bonding surfaces 38 and 48 of corresponding connecting rods 37 and 47 faced each other. Then, fasteners 42 of section member 40 were allowed to be alternately inserted between fasteners 32 of first member 30. Bonding surfaces 38 and 48 of corresponding connecting rods 37 and 47 were bonded by a high frequency heating method while the bottom surfaces of the connecting rods 37 and 47 were positioned on the same plane. In this way, a fastener assembly containing 100 individual tag pins was obtained.

Example 2

The method of example 1 was used but a concave groove 62 was formed along the whole length of connecting section at bonding surface 58 of the first assembly member. A protrusion or tongue 72 was formed along the whole length of connecting rod 67 on the second member. Thereafter, protrusion 72 was inserted in concave groove 62 and then bonding was completed.

In the fastener assembly which is provided according to the present invention, the fastener assemblies which are to be mutually combined are put together such that each of the fasteners in one assembly are alternately inserted between the fasteners of the other assembly. The connecting rods are then coupled together. Therefore, the thickness of a fastener and a fastener assembly has to be at most equal to or slightly smaller than the distance between two adjacent fasteners. For example, when the thickness of a fastener is between 0.8 mm and 0.9 mm, the distance between the adjacent fasteners should be between 0.9 mm and 1 mm.

In the present invention, at the time of forming the fasteners, the connecting rods of the assemblies to be bonded are formed only at one side of the lower section at the center where coupling to the connection necks is made such that the bonding surface is below the neck. Consequently, when the two assemblies are coupled together, the bonding surface formed on the connecting rod of each assembly is bonded to the corresponding bonding surface of the other assembly. In this fashion, the fasteners of each assembly are inserted between the fasteners of the adjacent assembly and are kept in a straight line.

## Claims

1. A tag pin fastener assembly (20) comprising a first tag pin assembly member (30) having a first connecting rod (37) and a plurality of tag pins (32) coupled to said first connecting rod in a predetermined spacing, a second tag pin assembly member (40) having a second connecting rod (47) and a plurality of tag pins (42) coupled to said second connecting rod in said predetermined spacing, and coupling means for coupling said first and second connecting rods so that said tag pins (32) on said first rod (37) are alternately arranged with the tag pins (42) on said second rod (47) whereby a complete tag pin fastener assembly is provided.

2. The tag pin fastener assembly as claimed in claim 1, wherein each said tag pin (32, 42) includes a head section (33, 43) and a crossbar (35, 45) coupled together by a filament (34, 44) and a connecting neck (36, 46) extending from said crossbar in a direction opposite to said filament.

3. The tag pin fastener assembly as claimed in claim 2, wherein said connecting necks (36, 46) couple said tag pins to said respective first and second connecting rods (37, 47).

4. The tag pin fastener assembly as claimed in claim 3, wherein said connecting necks (36, 46) are formed partially on said respective first and second connecting rods (37, 47) so that a portion of said connecting necks extend off of said respective first and second connecting rods.

5. The tag pin fastener assembly as claimed in claim 4, wherein said tag pins (32, 42) lie in a substantially straight line when said first and second connecting rods (37, 47) are coupled together.

6. The tag pin fastener assembly as claimed in claim 4, wherein about one-half of said connecting necks (36, 46) of said tag pins are coupled to said respective first and second connecting rods (37, 47), the remaining portion of said connecting necks extending off of said respective first and second connecting rods.

7. The tag pin fastener assembly as claimed in claim 1, wherein the thickness of each said tag pin (32, 42) is substantially equal to said predetermined spacing of said respective tag pins.

8. The tag pin fastener assembly as claimed in claim 1, wherein the thickness of each said tag pin (32, 42) is slightly smaller than said predetermined spacing of said respective tag pins.

9. The tag pin fastener assembly as claimed in claim 1, wherein said first connecting (37) rod includes a first bonding surface (38) extending longitudinally therealong and said second connecting rod (47) includes a second bonding surface (48) extending longitudinally therealong, said coupling means acting to couple said first and second bonding surfaces together.

10. The tag pin fastener assembly as claimed in claim 9, wherein said coupling means is selected from the group consisting of high frequency bonding, ultrasonic bonding, bonding adhesives, bonding by melt fusion and heat and snap-fit bonding.

11. The tag pin fastener assembly as claimed in claim 9, wherein said first bonding surface includes a groove (62) and said second bonding surface includes a tongue (72), said tongue being inserted in said groove.

12. The tag pin fastener assembly as claimed in claim 11, wherein said groove (62) extends along the length of said first bonding surface.

13. The tag pin fastener assembly as claimed in claim 12, wherein said tongue (72) extends along said second bonding surface.

14. The tag pin fastener assembly as claimed in claim 9, wherein said first bonding surface includes a plurality of openings and said second bonding surface includes a plurality of corresponding projections, said projections being inserted in said corresponding openings.

15. The tag pin fastener assembly as claimed in claim 14, wherein said projections are snap-fit in said corresponding grooves.

16. A method of manufacturing a tag pin fastener assembly comprising the steps of molding a first tag pin assembly member (30) having a first connecting rod (37) and a plurality of tag pins (32) coupled to said first connecting rod (37) in a predetermined spacing, molding a second tag pin assembly member (40) having a second connecting rod (47) and a plurality of tag pins (42) coupled to said second connecting rod in said predetermine spacing, and coupling said first connecting rod (37) to said second connecting rod (47) so that said tag pins on said first rod are alternately arranged with the tag pins on said second rod.

## Patentansprüche

1. Etikettierstifte-Verbund (20) mit einem ersten Etikettierstifte-Verbundglied (30), das eine erste Verbindungsstange (37) und eine Mehrzahl von Etikettierstiften (32) aufweist, die mit der genannten ersten Verbindungsstange in einem vorbestimmten gegenseitigen Abstand gekoppelt sind, einem zweiten Etikettierstifte-Verbundglied (40), das eine zweite Verbindungsstange (47) und eine Mehrzahl von Etikettierstiften (42) aufweist, die mit der zweiten Verbindungsstange in dem genannten vorbestimmten gegenseitigen Abstand gekuppelt sind, und mit Kupplungsmitteln, um die genannte erste und die genannte zweite Verbindungsstange so zu kuppeln, daß die genannten Etikettierstifte (32) an der genannten ersten Stange (37) mit den Etikettierstiften (42) an der genannten zweiten Stange (47) abwechselnd angeordnet sind, wodurch sich ein vollständiger Etikettierstifte-Verbund ergibt.

2. Etikettierstifte-Verbund nach Anspruch 1, bei dem jeder der genannten Etikettierstifte (32, 42) einen Kopfteil (33, 43) und einen Querstab (35, 45), die durch einen Strang (34, 44) miteinander gekuppelt sind, sowie einen Verbindungshals (36, 46) aufweist, der sich von dem genannten Querstab in einer zu dem genannten Strang entgegengesetzten Richtung erstreckt.

3. Etikettierstifte-Verbund nach Anspruch 2, bei dem die genannten Verbindungshälse (36, 46) die genannten Etikettierstifte mit der genannten ersten bzw. zweiten Verbindungsstange (37, 47) kuppeln.

4. Etikettierstifte-Verbund nach Anspruch 3, bei dem die genannten Verbindungshälse (36, 46) an der genannten ersten bzw. zweiten Verbindungsstange (37, 47) teilweise angeformt sind, so daß ein Teil der genannten Verbindungshälse sich von der genannten ersten bzw. zweiten Verbindungsstange weg erstreckt.

5. Etikettierstifte-Verbund nach Anspruch 4, bei dem die genannten Etikettierstifte (32, 42) in einer im wesentlichen geraden Linie liegen, wenn die genannte erste und zweite Verbindungsstange (37, 47) miteinander gekuppelt sind.

6. Etikettierstifte-Verbund nach Anspruch 4, bei dem die genannten Verbindungshälse (36, 46) der genannten Etikettierstifte etwa mit einer Hälfte mit der genannten ersten bzw. zweiten Verbindungsstange (37, 47) gekuppelt sind und sich der verbleibende Teil der genannten Verbindungshälse von der genannten ersten bzw. zweiten Verbindungsstange weg erstreckt.

7. Etikettierstifte-Verbund nach Anspruch 1, bei dem die Dicke jedes der genannten Etikettierstifte (32, 42) im wesentlichen gleich groß ist wie der genannte vorbestimmte gegenseitige Abstand der genannten, betreffenden Etikettierstifte.

8. Etikettierstifte-Verbund nach Anspruch 1, bei dem die Dicke jedes der genannten Etikettierstifte (32, 42) etwas geringer ist als der genannte vorbestimmte gegenseitige Abstand der genannten, betreffenden Etikettierstifte.

9. Etikettierstifte-Verbund nach Anspruch 1, bei dem die genannte erste Verbindungsstange (37) eine erste Verbindungsfläche (38), die sich an ihr in Längsrichtung erstreckt, und die genannte zweite Verbindungsstange (47) eine zweite Verbindungsfläche (48) aufweist, die sich an ihr in Längsrichtung erstreckt, wobei die genannten Kupplungsmittel wirksam sind, um die genannten ersten und zweiten Verbindungsflächen miteinander zu kuppeln.

10. Etikettierstifte-Verbund nach Anspruch 9, bei dem die genannten Kupplungsmittel aus einer Gruppe von Mitteln ausgewählt sind, die aus Hochfrequenz-Verbinden, Ultraschall-Verbinden, Klebstoff-Verbinden, Verbinden durch Schmelzschweißung sowie Wärme- und Schnappverbindung besteht.

11. Etikettierstifte-Verbund nach Anspruch 9, bei dem die genannte erste Verbindungsfläche eine Nut (62) und die genannte zweite Verbindungsfläche eine Zunge (72) aufweist, wobei die genannte Zunge in die genannte Nut eingesetzt ist.

12. Etikettierstifte-Verbund nach Anspruch 11, bei dem sich die genannte Nut (62) längs der Länge der genannten ersten Verbindungsfläche erstreckt.

13. Etikettierstifte-Verbund nach Anspruch 12, bei dem sich die genannte Zunge (72) längs der genannten zweiten Verbindungsfläche erstreckt.

14. Etikettierstifte-Verbund nach Anspruch 9, bei dem die genannte erste Verbindungsfläche eine Mehrzahl von Öffnungen und die genannte zweite Verbindungsfläche eine Mehrzahl entsprechender Vorsprünge aufweist, wobei die genannten Vorsprünge in die genannten entsprechenden Öffnungen eingesetzt sind.

15. Etikettierstifte-Verbund nach Anspruch 14, bei der die genannten Vorsprünge unter Bildung einer Schnappverbindung in die genannten. entsprechenden Nuten eingreifen.

16. Verfahren zur Herstellung eines Etikettierstifte-Verbundes mit den Verfahrensschritten des Formpressens eines ersten Etikettierstifte-Verbundgliedes (30), das eine erste Verbindungsstange (37) und eine Mehrzahl von Etikettierstiften (32) aufweist, die mit der genannten ersten Verbindungsstange (37) in vorbestimmtem gegenseitigem Abstand gekuppelt sind, des Formpressens eines zweiten Etikettierstifte-Verbundgliedes (40), das eine zweite Verbindungsstange (47) und eine Mehrzahl von Etikettierstiften (42) aufweist, die mit der genannten zweiten Verbindungsstange in dem genannten vorbestimmten gegenseitigen Abstand gekuppelt sind, und des Kuppelns der genannten ersten Verbindungsstange (37) mit der genannten zweiten Verbindungsstange (47), so, daß die genannten Etikettierstifte an der genannten ersten Stange im Wechsel mit den Etikettierstiften an der genannten zweiten Stange angeordnet sind.

**Revendications**

1. Ensemble de montage d'attaches d'étiquettes (20), comprenant un premier élément de montage d'attaches d'étiquettes (30) possédant une première barre d'assemblage (37) et une pluralité d'attaches d'étiquettes (32) accouplées à cette première barre d'assemblage avec un espacement prédéterminé, un deuxième élément de montage d'attaches d'étiquettes (40) possédant une deuxième barre d'assemblage (47) et une pluralité d'attaches d'étiquettes (42) accouplées à cette deuxième barre d'assemblage avec le même espacement prédéterminé, et un moyen d'accouplement pour accoupler la première et la deuxième barre d'assemblage de telle sorte que les attaches d'étiquettes (32) présentes sur la première barre (32) alternent avec les attaches d'étiquettes (42) présentes sur la deuxième barre (47), de sorte qu'on obtient un ensemble complet de montage d'attaches d'étiquettes.

2. Ensemble de montage d'attaches d'étiquettes selon la revendication 1, dans lequel chaque attache d'étiquette (32, 42) comprend une partie de tête (33, 43) et une barrette transversale (35, 45) mutuellement accouplées par un filament (34, 44), et un col d'assemblage (36, 46) s'étendant à partir de la barrette en direction opposée au filament.

3. Ensemble de montage d'attaches d'étiquettes selon la revendication 2, dans lequel les cols d'assemblage (36, 46) accouplent les attaches d'étiquettes respectivement à la première et à la deuxième barre d'assemblage (37, 47).

4. Ensemble de montage d'attaches d'étiquettes selon la revendication 3, dans lequel les cols d'assemblage (36, 46) sont formés en partie sur les première et deuxième barres d'assemblage respectives (37, 47), de sorte qu'une partie des cols d'assemblage s'étend en dehors des première et deuxième barres d'assemblage respectives.

5. Ensemble de montage d'attaches d'étiquettes selon la revendication 4, dans lequel les attaches d'étiquettes (32, 42) sont alignées sensiblement en ligne droite lorsque la première et la deuxième barre d'assemblage (37, 47) sont mutuellement accouplées.

6. Ensemble de montage d'attaches d'étiquettes selon la revendication 4, dans lequel environ une moitié des cols d'assemblage (36, 46) est accouplée aux première et deuxième barres d'assemblage respectives (37, 47), la partie restante des cols d'assemblage s'étendant en dehors des première et deuxième barres d'assemblage respectives.

7. Ensemble de montage d'attaches d'étiquettes selon la revendication 1, dans lequel l'épaisseur de chaque attache d'étiquette (32, 42) est sensiblement égale à l'espacement prédéterminé des attaches d'étiquettes respectives.

8. Ensemble de montage d'attaches d'étiquettes selon la revendication 1, dans lequel l'épaisseur de chaque attache d'étiquette (32, 42) est légèrement inférieure à l'espacement prédéterminé des attaches d'étiquettes respectives.

9. Ensemble de montage d'attaches d'étiquettes selon la revendication 1, dans lequel la première barre d'assemblage (37) comprend une première surface de liaison (38) s'étendant longitudinalement le long de la barre, et la deuxième barre d'assemblage (47) compend une deuxième surface de liaison (48) s'étendant longitudinalement le long de la barre, le moyen d'accouplement agissant pour accoupler entre elles la première et la deuxième surface de liaison.

10. Ensemble de montage d'attaches d'étiquettes selon la revendication 9, dans lequel le moyen d'accouplement est sélectionné à partir du groupe constitué de la liaison sous haute fréquence, de la liaison ultrasonore, de la liaison par colles, de la liaison par fusion à chaud et de la liaison par enclenchement.

11. Ensemble de montage d'attaches d'étiquettes selon la revendication 9, dans lequel la première surface de liaison comprend une rainure (62) et la deuxième surface de liaison comprend une languette (72), la languette étant insérée dans la rainure.

12. Ensemble de montage d'attaches d'étiquettes selon la revendication 11, dans lequel la rainure (62) s'étend sur la longueur de la première surface de liaison.

13. Ensemble de montage d'attaches d'étiquettes selon la revendication 12, dans lequel la languette (72) s'étend le long de la deuxième surface de liaison.

14. Ensemble de montage d'attaches d'étiquettes selon la revendication 9, dans lequel la première surface de liaison comprend une pluralité d'ouvertures et la deuxième surface de liaison comprend une pluralité de saillies correspondantes, les saillies étant insérées dans les ouvertures correspondantes.

15. Ensemble de montage d'attaches d'étiquettes selon la revendication 14, dans lequel les saillies sont montées par enclenchement dans les rainures correspondantes.

16. Procédé de fabrication d'un ensemble de montage d'attaches d'étiquettes comprenant les étapes consistant à mouler un premier élément de montage d'attaches d'étiquettes (30) possédant une première barre d'assemblage (37) et une pluralité d'attaches d'étiquettes (32) accouplées à cette première barre d'assemblage (37) avec un espacement prédéterminé, à mouler un deuxième élément de montage d'attaches d'étiquettes (40) possédant une deuxième barre d'assemblage (47) et une pluralité d'attaches d'étiquettes (42) accouplées à cette deuxième barre d'assemblage avec le même espacement prédéterminé, et à accoupler la première barre d'assemblage (37) à la deuxième barre d'assemblage (47) de telle sorte que les attaches d'étiquettes présentes sur la première barre alternent avec les attaches d'étiquettes présentes sur la deuxième barre.

FIG.1

FIG. 2

PRIOR  ART

FIG.5

# FIG. 3

# FIG. 4 PRIOR ART

# FIG.6.

# FIG.7.

# FIG.8.

# FIG.9.

4